# DEMANDE DE BREVET EUROPEEN

(11) **EP 2 630 867 A1**
(43) Date de publication de la demande: **28.08.2013**
(21) Numéro de dépôt: 13155879.3
(22) Date de dépôt: 20.02.2013
(51) Int. Cl.: A21B 3/07

(54) **Four à soles comprenant un mécanisme de déplacement transversal de l'élévateur**

(30) Priorité: 22.02.2012 FR 1251585
(71) Demandeur: EUROFOURS, 59144 Gommegnies (FR)
(72) Inventeur: Airoldi, Frédéric, 51120 SEZANNE (FR); Lancelot, Nicolas, 7387 ROISIN (BE); Marechal, Christophe, 51230 PLEURS (FR)
(74) Mandataire: Balesta, Pierre

(57) **Abrégé**

L'invention porte sur un Four à soles (10), présentant une section supérieure (10a) et une section inférieure (10b) et comportant :
• une façade avant (11) ;
• une pluralité de chambres de cuisson (13,13',13");
• un élévateur (14) mobile verticalement ;
• des premiers moyens de déplacement (34) pour déplacer verticalement l'élévateur entre les sections inférieure et supérieure du four ;
• un enfourneur (18) monté mobile en translation sur l'élévateur (14);
• une hotte (20) faisant saillie depuis la section supérieure (10a) de la façade avant du four.

L'invention se caractérise en ce que le four comporte en outre des seconds moyens de déplacement (30) pour déplacer l'élévateur (14) selon ladite seconde direction de déplacement (D2) entre une position rapprochée et une position éloignée de la façade avant, de manière à pouvoir positionner l'élévateur en position haute au niveau de la hotte.

## Description

La présente invention concerne le domaine technique des fours de boulangerie-pâtisserie.

Elle concerne plus précisément le domaine des fours à soles.

Traditionnellement, un four à soles présente une section supérieure et une section inférieure et comportant :
- une façade avant ;
- une pluralité de chambres de cuisson disposées les unes au-dessus des autres et débouchant dans la façade ;
- un élévateur mobile selon une première direction de déplacement ;
- des premiers moyens de déplacement pour déplacer l'élévateur entre les sections inférieure et supérieure du four selon la première direction de déplacement;
- un enfourneur monté mobile en translation sur l'élévateur selon une seconde direction de déplacement orthogonale à la façade avant et à la première direction de déplacement de manière à pouvoir être engagé dans l'une ou l'autre des chambres de cuisson ;
- une hotte faisant saillie depuis la section supérieure de la façade avant du four selon la seconde direction de déplacement.

L'enfourneur permet au boulanger d'enfourner (et désenfourner) ses pains dans l'une ou l'autre des chambres de cuisson du four.

L'élévateur permet quant à lui de déplacer l'enfourneur selon la première direction de déplacement, qui est le plus souvent une direction verticale, afin d'amener l'enfourneur devant l'une ou l'autre des chambres de cuisson.

Comme illustré dans FR 2 710 497, la hotte comporte traditionnellement un extracteur relié à une conduite afin d'évacuer la buée ou la vapeur d'eau émanant des chambres de cuisson vers l'extérieur du local.

On comprend que la hotte fait saillie perpendiculairement depuis la façade avant vers la zone de travail du boulanger.

L'un des problèmes posés par l'élévateur, également appelé élévateur-enfourneur, est son encombrement.

En effet, comme la longueur de l'enfourneur doit correspondre sensiblement à la profondeur de la chambre de cuisson, on comprend que l'encombrement maximal du four correspond environ à deux fois la profondeur des chambres de cuisson.

En outre, comme l'élévateur-enfourneur est utilisé régulièrement, il est rarement démonté du four, même lors de la cuisson des pains.

Plusieurs solutions ont été imaginées afin de ranger l'élévateur-enfourneur afin qu'il ne gêne pas le boulanger pendant la cuisson des pains.

Une solution est de déplacer l'élévateur enfourneur selon la première direction de déplacement afin de l'amener en section supérieure du four, au niveau de la hotte.

Comme la hotte est généralement disposée à une hauteur supérieure à la taille du boulanger, il en résulte que l'élévateur-enfourneur, dans cette position haute, ne gêne pas le boulanger dès lors qu'il s'étend au-dessus de la tête de l'artisan.

Les élévateurs-enfourneurs de ce type comprennent généralement une portion d'extrémité rabattable qui doit être rabattue vers l'arrière de l'élévateur avant son déplacement en position haute. Cette portion d'extrémité présente une longueur au moins égale à la largeur de la hotte (la largeur étant considérée selon la seconde direction de déplacement) afin que l'élévateur-enfourneur ne vienne pas en contact avec la hotte lorsqu'il est amené en position haute.

Les inventeurs ont constaté que l'utilisateur oublie parfois de rabattre cette portion d'extrémité avant de déplacer l'élévateur-enfourneur dans sa position haute, également appelée position de « garage », à la suite de quoi l'élévateur-enfourneur vient heurter la hotte. Ces chocs répétés sont de nature à endommager la hotte ainsi que l'élévateur-enfourneur, ce qui bien évidemment n'est pas désirable.

### Objet et résumé de l'invention

Un but de l'invention est de fournir un four à soles remédiant notamment à l'inconvénient mentionné ci-dessus.

L'invention atteint son but par le fait que le four à soles comporte en outre des seconds moyens de déplacement pour déplacer l'élévateur selon ladite seconde direction de déplacement entre une position rapprochée et une position éloignée de la façade avant, les seconds moyens de déplacement permettant de positionner l'élévateur à distance de la hotte lorsque ledit élévateur a atteint la section supérieure du four.

Ainsi, selon l'invention, l'élévateur est mobile selon la seconde direction de déplacement ; l'ensemble formé de l'élévateur et de l'enfourneur, cet ensemble étant appelé l'élévateur-enfourneur, peut être déplacé, entre la position rapprochée et la position éloignée, grâce aux seconds moyens de déplacement selon ladite seconde direction de déplacement, c'est-à-dire en général selon une direction horizontale perpendiculaire à la façade avant.

On comprend que le déplacement vers la position éloignée permet d'éloigner l'élévateur, et donc l'enfourneur qui est monté sur l'élévateur, de la façade avant, grâce à quoi l'enfourneur ne vient pas buter contre la hotte lorsqu'il est amené en section supérieure du four. De préférence, le déplacement de l'élévateur depuis sa position rapprochée vers sa position éloignée est réalisé sur une distance au moins égale à la largeur de la hotte.

Au sens de l'invention, l'enfourneur peut être introduit dans l'une ou l'autre des chambres de cuisson lorsque l'élévateur est en position rapprochée, alors qu'en position éloignée, l'enfourneur n'est pas destiné à être déplacé par rapport à l'élévateur.

Notamment, lorsque l'élévateur est en position éloignée, l'enfourneur se trouve en dehors des chambres de cuisson.

Avantageusement, les seconds moyens de déplacement sont configurés pour amener l'élévateur en position éloignée lorsque l'élévateur est amené vers la section supérieure du four par les premiers moyens de déplacement, de manière que, considéré selon la seconde direction de déplacement, l'élévateur soit positionné à distance de la hotte lorsque l'élévateur a atteint la section supérieure.

Ainsi, le passage entre la position rapprochée et la position éloignée est effectué lorsque l'on déplace l'élévateur vers la hotte. Plus précisément, ce déplacement est préférentiellement effectué progressivement lorsque l'élévateur est situé entre la chambre de cuisson supérieure, c'est-à-dire celle des chambres de cuisson qui est disposée la plus haute, et la hotte.

On comprend que lorsque l'élévateur a atteint sa position haute, étant positionné en section supérieure, ledit élévateur se trouve à la même hauteur que la hotte. L'élévateur et l'enfourneur sont alors disposés en retrait de la hotte.

Un autre intérêt de l'invention est que le passage de la position rapprochée à la position éloignée est effectué en hauteur, et par voie de conséquence, au-dessus des meubles ou appareils situés à proximité du four. Ainsi, l'enfourneur ne vient pas buter contre les meubles ou appareils lorsque l'enfourneur est amené en position éloignée. Cela permet donc de disposer d'un élévateur plus long, et donc de chambres de cuisson plus longues, dans un local de taille réduite.

Selon un mode de réalisation particulièrement avantageux, l'élévateur comporte un corps monté à un bras des premiers moyens de déplacement, de manière coulissante selon la seconde direction de déplacement ; l'enfourneur est monté audit corps de manière coulissante selon la seconde direction de déplacement, et les seconds moyens de déplacement sont configurés pour déplacer le corps par rapport au bras selon la seconde direction de déplacement.

On comprend donc que le déplacement de l'élévateur le long des bras des premiers moyens de déplacement, selon la seconde direction de déplacement, permet de faire passer l'élévateur entre sa position rapprochée et sa position éloignée.

Les bras sont quant à eux déplaçables selon la première direction de déplacement, grâce à des moyens de déplacement connus par ailleurs.

A la lumière de ce qui précède, on comprend que, lorsque l'élévateur est positionné dans la section supérieure, en position haute, la hotte est disposée entre la façade avant et le corps de l'élévateur.

Avantageusement, les seconds moyens de déplacement comportent un premier guide fixé au four et s'étendant selon la première direction de déplacement, une bielle comprenant une première extrémité coopérant avec le premier guide et une seconde extrémité coopérant avec le corps de l'élévateur, et une butée située dans la section supérieure du four tout en étant disposée transversalement audit premier guide, la bielle étant configurée pour pivoter autour d'un axe de pivotement perpendiculaire au plan défini par les première et seconde direction de déplacement, ledit axe de pivotement passant par la première extrémité de la bielle lorsque la première extrémité de la bielle vient au contact de la butée, le pivotement de la bielle entraînant le déplacement du corps de l'élévateur par rapport au bras selon la seconde direction de déplacement afin d'amener l'élévateur en position éloignée.

De préférence, mais non exclusivement, la butée est disposée sensiblement à la même hauteur que la hotte.

Pour guider le déplacement de la bielle, la première extrémité de la bielle comporte préférentiellement un premier galet engagé dans le premier guide.

Par ailleurs, les seconds moyens de déplacement sont de préférence configurés pour bloquer la bielle lors de son arrivée au contact de la butée. Pour ce faire, les seconds moyens de déplacement comportent avantageusement en outre un organe de verrouillage permettant de bloquer le déplacement vers le bas de l'extrémité supérieure de la bielle lorsque ladite bielle pivote autour de l'axe de pivotement.

De préférence, mais non exclusivement, l'organe de verrouillage se déverrouille lorsque l'on applique sur le corps une force selon la première direction de déplacement vers le bas, supérieure à un seuil prédéterminé. Ce seuil prédéterminé correspond par exemple à la force de rappel exercée par un ressort. En d'autres termes, dans ce mode de réalisation non limitatif, l'organe de verrouillage se déverrouille lorsque la force verticale dirigée vers le bas qui est appliquée sur l'élévateur est suffisante pour contrer la force de rappel exercée par le ressort.

De manière particulièrement avantageuse, le four selon l'invention comporte en outre des moyens de maintien pour maintenir l'élévateur en position rapprochée lorsque l'élévateur est disposé en vis-à-vis de l'une ou l'autre des chambres de cuisson, lesdits moyens de maintien libérant le déplacement de l'élévateur selon la seconde direction de déplacement lorsque l'élévateur est amené dans la section supérieure du four.

On comprend donc que les moyens de maintien sont configurés pour autoriser le déplacement de l'élévateur vers sa position éloignée, avantageusement lorsque la première extrémité de la bielle vient au contact de la butée. De préférence, les moyens de maintien sont configurés pour bloquer la rotation de la bielle autour d'un axe passant par sa première extrémité.

De préférence, les moyens de maintien sont configurés pour libérer le déplacement de l'élévateur selon la seconde direction de déplacement lorsque l'élévateur a dépassé la chambre de cuisson supérieure.

En d'autres termes, lorsque le l'enfourneur est situé devant l'une ou l'autre des chambres de cuisson, les moyens de maintien agissent pour maintenir l'élévateur en position rapprochée.

Un intérêt est d'améliorer la sécurité du four, en empêchant tout déplacement intempestif de l'élévateur vers sa position éloignée, en particulier du corps de l'élévateur, lors des opérations d'enfournement de pains dans le four.

De préférence, les moyens de maintien comprennent un second guide fixé au four tout en s'étendant selon la première direction longitudinale, le second guide étant destiné à recevoir et maintenir la seconde extrémité de la bielle lorsque l'élévateur est en position rapprochée.

Pour ce faire, la bielle comporte préférentiellement un second galet apte à s'engager dans le second guide.

Ce second guide présente avantageusement une extrémité supérieure disposée sensiblement au niveau de la chambre de cuisson supérieure.

De préférence, le premier guide et le second guide constituent deux rails de guidage verticaux, de préférence juxtaposés, le second guide étant préférentiellement disposé entre le premier guide et la face frontale de la façade avant.

En outre, au moins l'un des premier et deuxième guides, de préférence les deux, sont fixés à une paroi latérale du four.

Enfin, et de manière avantageuse, les seconds moyens de déplacement sont disposés de part et d'autre de la façade avant du four.

### Brève description des dessins

L'invention sera mieux comprise à la lecture de la description qui suit d'un mode de réalisation de l'invention donné à titre d'exemple non limitatif, en référence aux dessins annexés, sur lesquels :
- la figure **1** est vue en perspective de la façade avant du four à soles selon l'invention, l'élévateur étant dans sa position éloignée ;
- la figure **2** est vue de côté du four de la figure **1****,** l'élévateur étant située en section inférieure du four, tout en étant dans sa position rapprochée ;
- la figure **3** est une vue de côté du four de la figure **2****,** l'élévateur étant situé en section médiane du four, tout en étant dans sa position rapprochée ;
- la figure **4** est vue de côté du four de la figure **2****,** l'élévateur étant amené vers la section supérieure du four, la bielle n'étant plus bloquée en rotation ;
- la figure **5** est une vue de côté du four de la figure **2****,** montrant le pivotement de la bielle autour d'un axe passant par sa première extrémité, le pivotement de la bielle entrainant le déplacement de l'élévateur vers sa position éloignée ;
- la figure **6** est une vue de côté du four de la figure **2****,** l'élévateur étant dans sa position éloignée, et étant positionné à même hauteur que la hotte ; et
- la figure **7** est une vue de détail de l'organe de verrouillage permettant de bloquer le déplacement de la première extrémité de la bielle lors de la rotation de ladite bielle.

### Description détaillée de l'invention

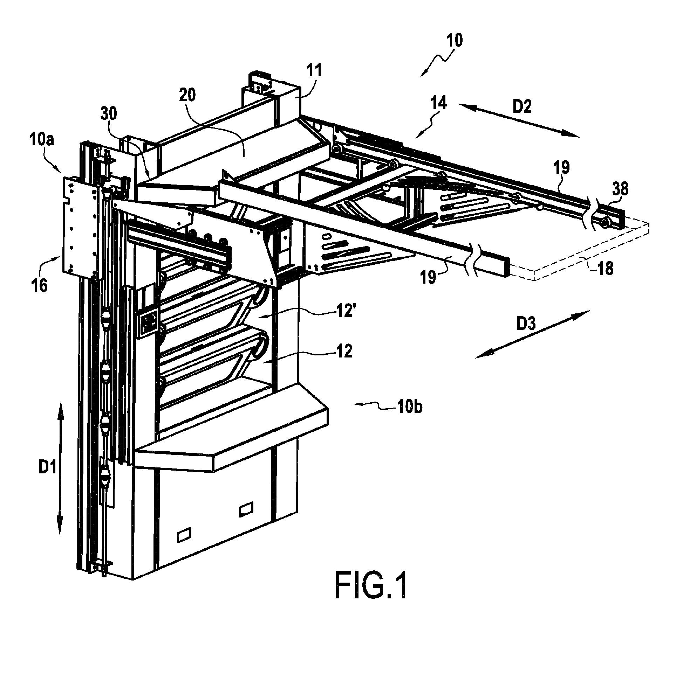

Sur la figure **1****,** on a représenté la partie frontale ou façade avant **11** d'un four à soles **10.** Ce four à soles **10** comporte une pluralité de portes **12** obturant des chambres de cuisson **13,13',13"** et **13"'** disposées les unes sur les autres. Dans cet exemple non limitatif, le four **10** comporte quatre chambres de cuisson **13, 13', 13", 13"'.** Les chambres de cuisson débouchent dans la façade avant **11.** Le four à soles **10** présente une section supérieure **10**a et une section inférieure **10b.** Le four à soles **10** comporte en outre un élévateur **14** qui est mobile selon une première direction de déplacement **D1,** qui est verticale dans cet exemple.

Le four à soles **10** comporte en outre des premiers moyens de déplacement **16** pour déplacer l'élévateur **14** entre les sections inférieure **10**b et supérieure **10**a du four **10** selon la première direction de déplacement **D1.**

Un enfourneur **18,** représenté en pointillé sur la figure **1****,** est monté mobile en translation sur l'élévateur **14** selon une seconde direction de déplacement **D2** qui est orthogonale à la façade avant **11** et à la première direction de déplacement **D1,** grâce à quoi l'enfourneur peut être engagé dans l'une ou l'autre des chambres de cuisson. Pour ce faire, dans cet exemple, le boulanger pousse l'enfourneur de manière à le déplacer en translation selon la deuxième direction de déplacement. Le four à soles **10** comporte également une hotte **20** qui fait saillie depuis la section supérieure **10**a de la façade avant **11** du four **10** selon la seconde direction de déplacement **D1.**

En d'autres termes, la hotte s'étend perpendiculairement à la façade avant du four vers la zone de travail du boulanger.

Plus précisément, la figure **1** représente l'élévateur **14** en position haute, c'est-à-dire la hauteur maximale qu'il peut atteindre lorsqu'il est positionné en section supérieure **10**a.

Selon une variante, l'enfourneur **18** peut être également déplacé par rapport à l'élévateur **14** selon une troisième direction de déplacement **D3** perpendiculaire aux première et seconde directions de déplacement. Dans cette variante, le four à soles comporte des chambres de cuisson qui sont disposées côte à côte à même hauteur ; le déplacement selon la troisième direction de déplacement permet d'amener l'enfourneur devant l'une ou l'autre des chambres de cuisson disposées à même hauteur.

De manière connue, les premiers moyens de déplacement comprennent de préférence un système de câble et poulie ainsi qu'un contrepoids (non représentés ici) qui permettent le déplacement manuel de l'élévateur selon la première direction de déplacement, en l'espèce une direction verticale.

Avantageusement, le contrepoids permet d'équilibrer l'élévateur de sorte qu'il peut être déplacé verticalement sans effort.

On précise par ailleurs que l'élévateur **14** comporte deux traverses de guidage **19** s'étendant selon la seconde direction de déplacement **D2** dans laquelle est monté coulissant l'enfourneur **18.**

Conformément à l'invention, le four à soles **10** comporte en outre des seconds moyens de déplacement **30** pour déplacer l'élévateur **14** selon ladite seconde direction de déplacement **D2** entre une position rapprochée et une position éloignée de la façade avant **11** du four à soles **10.**

Comme on le constate à l'aide de la figure **1****,** ce qui sera détaillé davantage ci-après, les seconds moyens de déplacement **30** sont configurés pour amener l'élévateur **14** en position éloignée lorsque l'élévateur est amené vers la section supérieure **10**a du four **10** par les premiers moyens de déplacement **16** de manière que, considéré selon la seconde direction de déplacement **D2,** l'élévateur **14** soit positionné à distance de la hotte **20** lorsque l'élévateur a atteint la section supérieure **10**a.

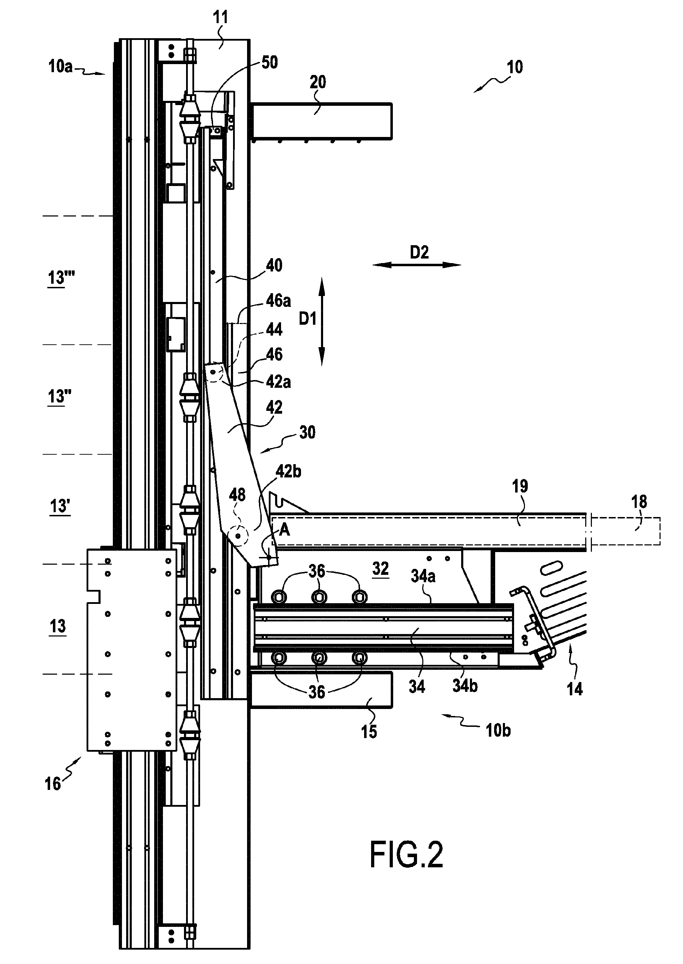

A l'aide des figures **2** à **6****,** on va maintenant décrire plus en détail, le mode de fonctionnement des seconds moyens de déplacement **30** selon l'invention.

Sur la figure **2****,** l'élévateur **14** est en position basse, celui-ci étant positionné au dessus d'un plateau inférieur **15** fixé à la façade avant du four **10.**

Dans cette position inférieure, l'enfourneur **18** est disposé devant l'entrée de la chambre de cuisson **13.**

L'enfourneur **18** peut alors être translaté selon la seconde direction de déplacement **D2** vers l'intérieur de la chambre de cuisson **13.**

Toujours dans cette position inférieure, l'élévateur **14** est dans sa position rapprochée de la façade avant **11** du four **10.**

On précise que l'élévateur **14** comporte un corps **32** qui supporte les traverses de guidage **19.**

Par ailleurs, les premiers moyens de déplacement **16** comportent au moins un bras **34** qui s'étend selon la seconde direction de déplacement **D2** et qui est mobile en translation selon la première direction de déplacement **D1,** c'est-à-dire verticalement.

Selon l'invention, le corps **32** est monté au bras **34** de manière coulissante selon la seconde direction de déplacement **D2.** Pour ce faire, dans cet exemple, le corps **32** est pourvu de roulettes **36** disposées de part et d'autre des bords longitudinaux **34**a et **34**b du bras **34.**

Comme le corps supporte les traverses de guidage **19,** on comprend que l'enfourneur **18** est monté audit corps **32** de manière coulissante selon la seconde direction de déplacement **D2.**

De préférence, les traverses longitudinales **19** sont munies de roulettes **38** visibles sur la figure **1** permettant le guidage en translation de l'enfourneur **18.**

Comme on l'expliquera plus en détail ci-après, les seconds moyens de déplacement **30** sont configurés pour déplacer le corps **32** par rapport au bras **34** selon la seconde direction de déplacement **D2.**

Dans la position inférieure de la figure **2****,** l'élévateur **14** est maintenu en position rapprochée grâce à des moyens de maintien qui seront décrits ci-après.

Dans cet exemple, les seconds moyens de déplacement **30** comportent un premier guide **40** fixé à une paroi latérale du four **10,** le premier guide **40** s'étendant selon la première direction de déplacement **D1,** entre le plateau inférieur **15** et la hotte **20.** Le premier guide **40** constitue un premier rail de guidage pour le premier galet.

Les seconds moyens de déplacement **30** comportent en outre une bielle **42** qui comprend une première extrémité **42**a coopérant avec le premier guide **40.** A cet effet, la première extrémité **42**a de la bielle **42** comporte un premier galet **44** qui est engagé dans le premier guide **40.** Ce premier galet **44** présente, dans cet exemple, la forme d'une roue pouvant rouler dans le premier guide **40.** La bielle **42** présente en outre une seconde extrémité **42**b, opposée à la première extrémité **42**a, qui coopère avec le corps **32** de l'élévateur **14.** Plus précisément, la seconde extrémité **42**b de la bielle **42** est fixée en rotation au corps **32** autour d'un axe de rotation **A.** Cet axe de rotation est parallèle à la troisième direction de déplacement précitée.

La seconde extrémité **42**b de la bielle **42** coopère par ailleurs avec un second guide **46** qui est fixé au four **10** tout en s'étendant selon la première direction longitudinale **D1.** Comme on le constate sur la figure **2****,** le second guide **46** est destiné à bloquer la rotation de la bielle **42** lorsque l'élévateur **14** est en position rapprochée. Pour ce faire, le seconde guide **46** est destiné à recevoir et maintenir la bielle **42** lorsque l'élévateur **14** est en position rapprochée.

A cet effet, la bielle comporte en outre un second galet **48** apte à s'engager dans le second guide **46.** Dans cet exemple, le second galet **48** présente la forme d'une roue similaire au premier galet **44.** En outre, le second guide constitue un second rail de guidage pour le second galet.

De préférence, le second galet est disposé à proximité de la seconde extrémité **42**b de la bielle **42.**

A l'aide de la figure **2****,** on comprend que le second galet et le second guide constituent des moyens de maintien qui permettent de maintenir l'élévateur **14** en position rapprochée lorsque l'élévateur est disposé en vis-à-vis de la chambre de cuisson inférieure.

En effet, le déplacement du corps **32** selon la première direction de déplacement n'est pas possible dans la mesure où le second galet **48** ne peut que translater selon la première direction de déplacement **D1.** En d'autres termes, la bielle **42,** sur la figure **2****,** ne peut pas pivoter, ce qui empêche la translation du corps **32** par rapport au bras **34.**

De façon plus générale, on comprend à l'aide de la figure **2** que la bielle **42** ne peut que translater selon la première direction de déplacement tant que le second galet **48** est engagé dans le second guide **46.**

On précise ici que le second guide **46** présente une extrémité supérieure **46**a qui est disposée sensiblement au niveau de la chambre de cuisson du four la plus haute. Dans cet exemple, l'extrémité supérieure **46a** du second guide **46** débouche vers le haut. On note également que la position verticale de l'extrémité supérieure **46**a du second guide **46** est située en dessous de la hotte **20,** au niveau de la chambre de cuisson supérieure.

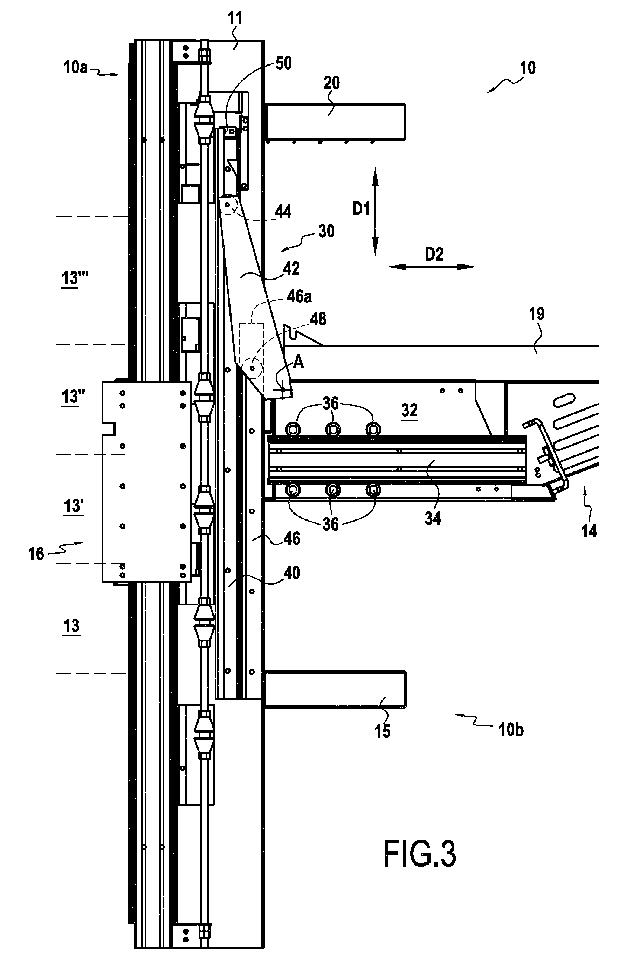

Sur la figure **3****,** on a représenté l'élévateur **14** en position intermédiaire, celui-ci se trouvant devant la chambre de cuisson **13'** disposée immédiatement au dessus de la chambre de cuisson **13.**

On constate que, par rapport à la position de la figure **2****,** la bielle **42** s'est déplacée en translation selon la première direction de déplacement **D1,** le second galet **48** étant encore logé dans le second guide **46.**

Par conséquent, les moyens de maintien agissent pour maintenir l'élévateur **14** en position rapprochée.

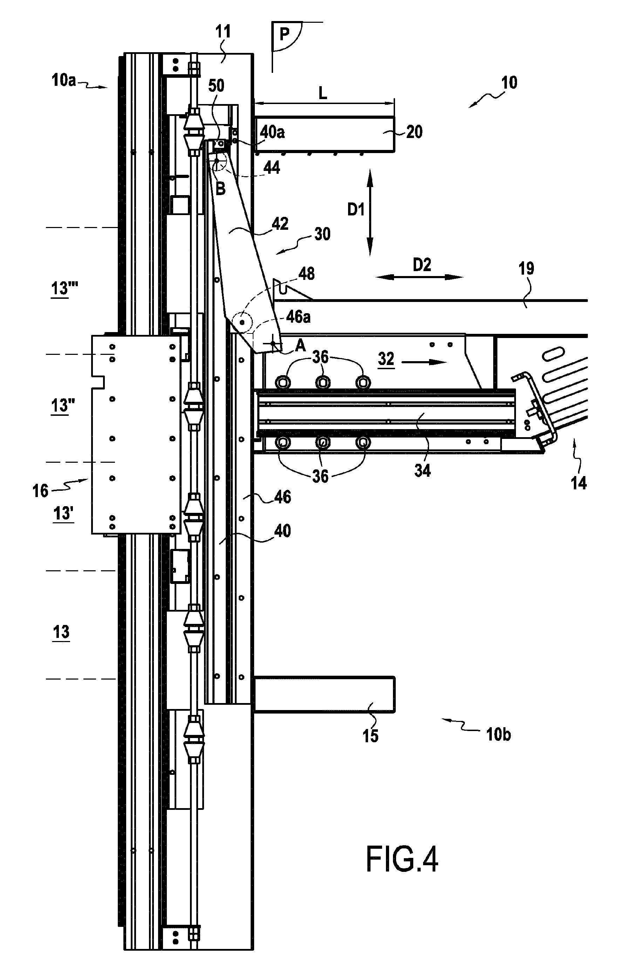

Sur la figure **4****,** on a représenté l'élévateur **14** lors de son amenée vers la section supérieure **10**a du four **10.** On constate sur la figure **4****,** que le premier guide **40** présente une extrémité supérieure **40**a située dans la section supérieure **10**a du four **10,** cette extrémité supérieure **40**a étant munie d'une butée **50** qui est disposée transversalement au premier guide **40** sensiblement à même hauteur que la hotte. Cette butée **50** appartient aux seconds moyens de déplacement **30.** Plus précisément, dans cet exemple, la butée obture l'extrémité supérieure du premier guide **40.**

Dans la position de la figure **4****,** l'élévateur **14** est encore dans sa position rapprochée, la première extrémité **42**a de la bielle **42** vient au contact de la butée **50.** Plus précisément, c'est le premier galet **44** qui vient au contact de la butée **50.**

Toujours dans cette position, on constate que la bielle **42** n'est plus maintenue par les moyens de maintien dans la mesure où le second galet **48** est désengagé du second guide **46.**

On comprend donc que pour passer de la position de la figure **3** à la position de la figure **4****,** la bielle **42** a subi uniquement une translation selon la première direction de déplacement **D1** jusqu'à ce que le premier galet **44** vienne au contact de la butée **50.**

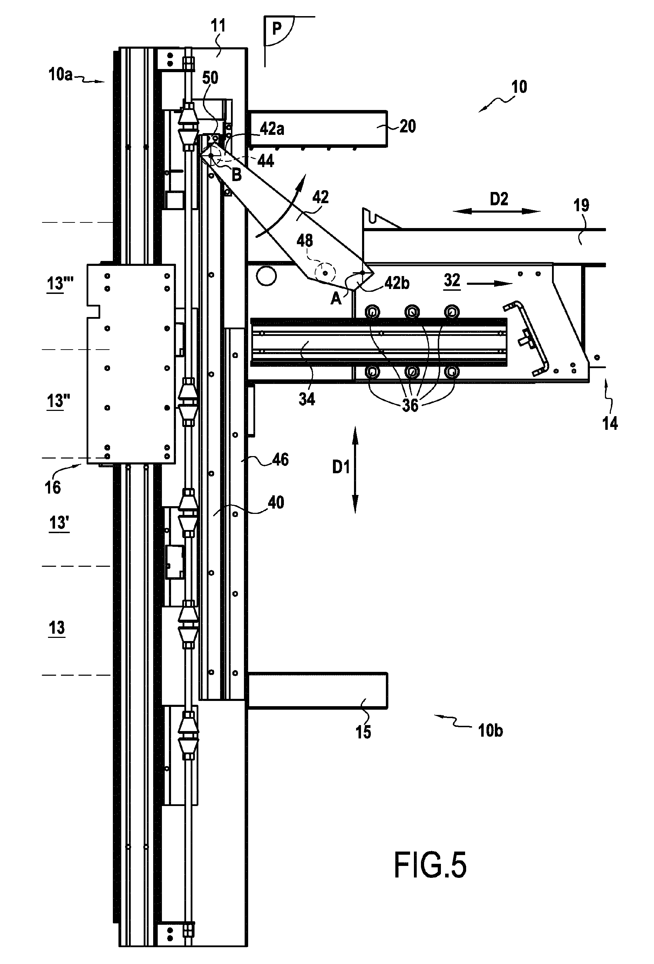

En continuant de déplacer l'élévateur **14** selon la première direction de déplacement **D1** vers la section supérieure **10**a du four **10,** on comprend à l'aide de la figure **5** que la bielle **42** opère une rotation autour d'un axe de pivotement **B** passant par la première extrémité **42**a de la bielle **42.** Plus précisément, cet axe de pivotement **B** est parallèle à l'axe de pivotement **A** et à la troisième direction de déplacement et donc perpendiculaire au plan **P** défini par les première et seconde directions de déplacement **D1, D2.** Cet axe de pivotement **B** correspond, dans cet exemple, à l'axe de rotation du galet **44.**

La rotation de la bielle **42** autour de l'axe de pivotement **B** est permise dans la mesure où le second galet **48** n'est plus engagé dans le second guide **46.** La bielle est conformée de sorte que cette rotation de la bielle **42** a lieu lorsque la première extrémité **42**a de la bielle **42** vient au contact de la butée 50. On comprend que le pivotement de la bielle **42** entraîne le déplacement du corps **32** de l'élévateur **14** par rapport au bras **34** selon la seconde direction de déplacement **D2** afin d'amener l'élévateur **14** en position éloignée.

A l'aide de la figure **5****,** on constate en effet que, lors de la rotation de la bielle **42,** la seconde extrémité **42**b de la bielle **42** pousse le corps **32** de l'élévateur **14** de sorte que ledit corps **32** coulisse le long du bras **34.** Ce déplacement du corps se fait progressivement pendant la montée de l'élévateur **14** vers sa position haute.

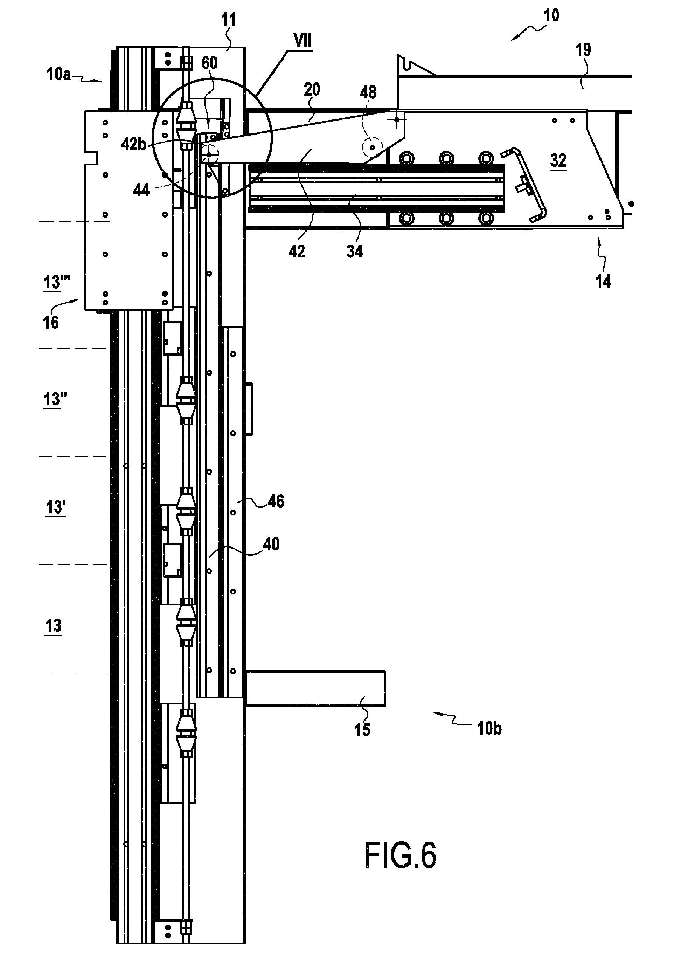

Sur la figure **6****,** l'élévateur **14** a atteint sa position haute, également appelée position de garage, dans laquelle l'élévateur est disposé à même hauteur que la hotte **20,** ladite hotte **20** se trouvant alors entre la façade avant du four et l'élévateur **14,** la bielle ayant poussé l'élévateur jusque dans sa position éloignée.

On comprend donc que la longueur de la bielle **42** est choisie en fonction de la longueur **L** de la hotte **20.**

De préférence, des moyens de blocage sont prévus afin de verrouiller l'élévateur **14** lorsque ce dernier est dans sa position haute.

Un intérêt est d'empêcher l'élévateur de continuer son déplacement vertical au-delà de la hotte.

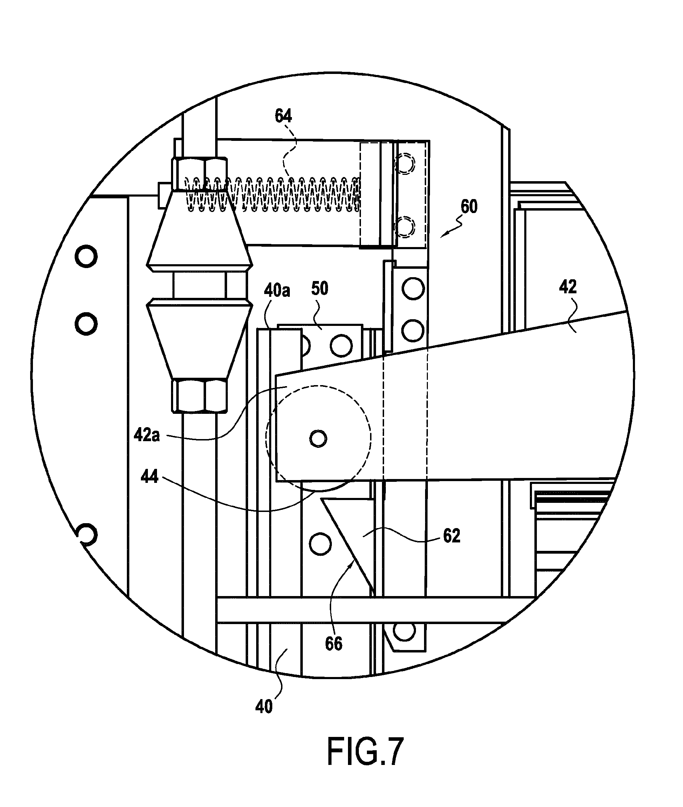

Selon un autre aspect de l'invention, les seconds moyens de déplacement comportent en outre un organe de verrouillage **60** qui permet de bloquer le déplacement vers le bas de l'extrémité supérieure **42**a de la bielle **42** lorsque la bielle pivote autour de l'axe de pivotement **B.** Cet organe de verrouillage est mieux visible sur la figure **7****.** L'organe de verrouillage **60** comporte un doigt de verrouillage **62** coopérant avec un ressort **64.** L'organe de verrouillage **62** est muni d'une portion inclinée **66** qui s'écarte pour laisser passer le premier galet **44** lorsque ce dernier est amené vers la butée **50.** Le doigt de verrouillage **62** se referme ensuite lorsque le premier galet **44** est venu au contact de la butée **50.** L'organe de verrouillage **60** est déverrouillé lorsqu'on applique sur le corps **32** une force dirigée vers le bas selon la première direction de déplacement qui est supérieure à un seuil prédéterminé. Cette force entraîne le déplacement de la bielle **42** vers le bas, de sorte que le premier galet **44** vient au contact du doigt de verrouillage **62** afin de le repousser en contrant la force de rappel du ressort **64.**

Bien entendu, d'autres types d'organes de verrouillage pourraient être prévus afin d'empêcher la descente de la première extrémité **42**a de la bielle **42** lors du pivotement de la bielle.

## Revendications

1. Four à soles (10), présentant une section supérieure (10a) et une section inférieure (10b) et comportant :
• une façade avant (11) ;
• une pluralité de chambres de cuisson (13,13',13") disposées les unes au-dessus des autres et débouchant dans la façade avant ;
• un élévateur (14) mobile selon une première direction de déplacement (D1) ;
• des premiers moyens de déplacement (34) pour déplacer l'élévateur entre les sections inférieure et supérieure du four selon la première direction de déplacement (D1) ;
• un enfourneur (18) monté mobile en translation sur l'élévateur (14) selon une seconde direction de déplacement (D2) orthogonale à la façade (11) avant et à la première direction de déplacement (D1) de manière à pouvoir être engagé dans l'une ou l'autre des chambres de cuisson ;
• une hotte (20) faisant saillie depuis la section supérieure (10a) de la façade avant du four selon la seconde direction de déplacement;
le four étant **caractérisé en ce qu'il** comporte en outre des seconds moyens de déplacement (30) pour déplacer l'élévateur (14) selon ladite seconde direction de déplacement (D2) entre une position rapprochée et une position éloignée de la façade avant, les seconds moyens de déplacement permettant de positionner l'élévateur à distance de la hotte lorsque ledit élévateur a atteint la section supérieure du four.

2. Four selon la revendication 1, **caractérisé en ce que** les seconds moyens de déplacement (30) sont configurés pour amener l'élévateur (14) en position éloignée lorsque l'élévateur est amené vers la section supérieure (10a) du four par les premiers moyens de déplacement, de manière que, considéré selon la seconde direction de déplacement (D2), l'élévateur soit positionné à distance de la hotte (20) lorsque l'élévateur a atteint la section supérieure (10a).

3. Four selon la revendication 1 ou 2, **caractérisé en ce que** l'élévateur (14) comporte un corps (32) monté à un bras (34) des premiers moyens de déplacement de manière coulissante selon la seconde direction de déplacement (D2), **en ce que** l'enfourneur (14) est monté audit corps (32) de manière coulissante selon la seconde direction de déplacement (D2), et **en ce que** les seconds moyens de déplacement (30) sont configurés pour déplacer le corps (32) par rapport au bras (34) selon la seconde direction de déplacement.

4. Four selon la revendication 3, **caractérisé en ce que**, lorsque l'élévateur (14) est positionné dans la section supérieure (10a), dans sa position haute, la hotte est disposée entre la façade avant et le corps de l'élévateur.

5. Four selon la revendication 3 ou 4, **caractérisé en ce que** les seconds moyens de déplacement (30) comportent un premier guide (40) fixé au four et s'étendant selon la première direction de déplacement (D1), une bielle (42) comprenant une première extrémité (42a) coopérant avec le premier guide et une seconde extrémité (42b) coopérant avec le corps (32) de l'élévateur, et une butée (50) située dans la section supérieure (10a) du four tout en étant disposée transversalement audit premier guide, la bielle étant configurée pour pivoter autour d'un axe de pivotement (B) perpendiculaire au plan (P) défini par les première et seconde direction de déplacement, ledit axe de pivotement passant par la première extrémité (42a) de la bielle lorsque la première extrémité de la bielle vient au contact de la butée, le pivotement de la bielle entraînant le déplacement du corps de l'élévateur par rapport au bras selon la seconde direction de déplacement afin d'amener l'élévateur en position éloignée.

6. Four selon la revendication 5, **caractérisé en ce que** la butée (50) est disposée sensiblement à la même hauteur que la hotte (20).

7. Four selon la revendication 5 ou 6, **caractérisé en ce que** la première extrémité (42a) de la bielle (42) comporte un premier galet (44) engagé dans le premier guide.

8. Four selon l'une quelconque des revendications 5 à 7, **caractérisé en ce que** les seconds moyens de déplacement (30) comportent en outre un organe de verrouillage (60) permettant de bloquer le déplacement vers le bas de l'extrémité supérieure de la bielle lorsque ladite bielle pivote autour de l'axe de pivotement (B).

9. Four selon la revendication 8, **caractérisé en ce que** l'organe de verrouillage se déverrouille lorsque l'on applique sur le corps une force selon la première direction de déplacement vers le bas, supérieure à un seuil prédéterminé.

10. Four selon l'une quelconque des revendications 1 à 9, **caractérisé en ce qu'il** comporte en outre des moyens de maintien (46,48) pour maintenir l'élévateur (14) en position rapprochée lorsque l'élévateur est disposé en vis-à-vis de l'une ou l'autre des chambres de cuisson, lesdits moyens de maintien libérant le déplacement de l'élévateur selon la seconde direction de déplacement lorsque l'élévateur est amené dans la section supérieure (10a) du four.

11. Four selon la revendication 10 et l'une quelconque des revendications 5 à 10, **caractérisé en ce que** les moyens de maintien comprennent un second guide (46) fixé au four tout en s'étendant selon la première direction longitudinale, le second guide étant destiné à recevoir et maintenir la bielle (42) lorsque l'élévateur est en position rapprochée.

12. Four selon la revendication 11, **caractérisé en ce que** la bielle (42) comporte un second galet (48) apte à s'engager dans le second guide.

13. Four selon les revendications 11 ou 12, **caractérisé en ce que** le second guide (46) présente une extrémité supérieure (46a) disposée sensiblement au niveau de la chambre de cuisson du four la plus haute.

14. Four selon l'une quelconque des revendications 11 à 13, **caractérisé en ce que** le premier guide (40) et le second guide (46) constituent de deux rails de guidage verticaux et juxtaposés.

15. Four selon l'une quelconque des revendications 1 à 14, **caractérisé en ce que** les seconds moyens de déplacement (30) sont disposés de part et d'autre de la façade avant du four.
